# EUROPÄISCHE PATENTSCHRIFT

(11) **EP 0 588 828 B1**
(45) Veröffentlichungstag und Bekanntmachung des Hinweises auf die Patenterteilung: **15.03.1995**
(21) Anmeldenummer: 92910747.2
(22) Anmeldetag: 22.05.1992
(51) Int. Cl.: F16H 61/00, F16H 61/02

(54) **VERFAHREN ZUM STEUERN EINES STUFENLOSEN GETRIEBES**
PROCESS FOR CONTROLLING AN INFINITELY VARIABLE TRANSMISSION
PROCEDE POUR LA COMMANDE D'UNE TRANSMISSION A VARIATION CONTINUE

(30) Priorität: 21.06.1991 DE 4120540
(43) Veröffentlichungstag der Anmeldung: 30.03.1994
(73) Patentinhaber: Dr.Ing.h.c. F. Porsche Aktiengesellschaft, 70435 Stuttgart (DE)
(72) Erfinder: PETERSMANN, Joseph, D-7251 Wimsheim (DE); SEIDEL, Willi, D-7147 Eberdingen-Hochdorf (DE); STEHLE, Heinz, D-7251 Weissach (DE); MÖLLERS, Werner, D-7135 Wiernsheim (DE); FRÖSCHKE, Uwe, D-7251 Wimsheim (DE)
(86) Internationale Anmeldenummer: EP9201155
(87) Internationale Veröffentlichungsnummer: WO9300531

(56) Entgegenhaltungen:
- EP-A- 0 347 263
- DE-A- 3 341 652
- DE-A- 3 922 051
- DE-A- 4 028 833
- DE-A- 4 035 726
- US-A- 4 836 056
- PATENT ABSTRACTS OF JAPAN Band 9, Nr. 149 (M-390)25. Juni 1985 & JP-A-60026847 (TOYOTA JIDOSHA) 9 Februr 1985
- AUTO & TECHNIK März 1992, Seiten 118 - 121; 'Fliessender Wechsel'

## Beschreibung

Die Erfindung betrifft ein Verfahren zum Steuern eines elektro-hydraulisch betätigten stufenlosen Getriebes nach dem Oberbegriff des Patentanspruches 1, wie es aus der US-A 48 36 056 bekannt ist.

Weiterentwicklungen auf dem Gebiet des Antriebsstranges von Kraftfahrzeugen beschäftigen sich vor allem mit Möglichkeiten der Verbrauchsoptimierung. Je nach Getriebebauart werden hierzu verschiedene Wege beschritten.

Bei Schaltgetrieben wird durch Hinzufügen eines weiteren Zahnradpaares die Anzahl der Gänge erhöht, um die vorzugsweise als Antrieb verwendete Brennkraftmaschine, im folgenden auch als Motor bezeichnet, möglichst nahe an ihrem optimalen Betriebspunkt zu betreiben. Jedoch erhöht diese Maßnahme das Gewicht des Getriebes und das Trägheitsmoment. Zudem sind dieser Art der Erweiterung durch die Bedienung des Getriebes Grenzen gesetzt. Die konventionelle H-Schaltung wird bei mehr als 6 Gängen unübersichtlich und vor allem bei stark instationärem Betrieb des Kraftfahrzeuges muß der Fahrer immer mehr Zeit und Aufmerksamkeit auf die Bedienung des Getriebes verwenden.

Möglichkeiten, die Bedienung eines Getriebes mit mehr als 6 Gängen zu erleichtern sind u.a. aus dem Nutzfahrzeugbereich bekannt. Beispielsweise wird im DE-Buch VDI-Berichte 612 "Elektronik im Kraftfahrzeugbau", S. 191 bis 202, VDI-Verlag Düsseldorf 1986 eine Elektronisch-Pneumatische Schaltung offenbart, bei der über einen Wippschalter (einen Gang hinauf- bzw. einen Gang herunterschalten) die Gänge vorgewählt und nach Kontrolle durch eine Steuerlogik hilfskraftgesteuert eingelegt werden. Eine Übertragung auf Pkws wurde bisher nicht realisiert.

Automatische Schaltgetriebe entlasten den Fahrer von den Funktionen "Wählen und Einlegen der Getriebegänge". Trotz ihres gegenüber dem konventionellen Schaltgetriebe geringeren mechanischen Wirkungsgrades können sie einen höheren Gesamtwirkungsgrad erreichen, indem der Motor in der Nähe seines wirkungsoptimalen Betriebspunktes betrieben wird. Sie werden in Kraftfahrzeugen in der Regel durch Planetengetriebe mit vorgeschaltetem hydrodynamischem Wandler realisiert. Durch die in den geometrischen Verhältnissen von Planetengetrieben festgelegte Stufung der Übersetzungen ist eine Erweiterung eines solchen Getriebes zwar möglich, aber nicht frei wählbar und erhöht zudem, wie auch beim Schaltgetriebe, die Baugröße und das Gewicht des Getriebes.

Weiterhin werden derzeit in Kraftfahrzeugen auch stufenlose Getriebe, nachfolgend auch CVT-Getriebe genannt, verbaut, insbesondere in der Ausführung als Umschlingungsgetriebe. Im Gegensatz zu den vorgenannten Getrieben ist die Spreizung größer und die Anzahl der möglichen Übersetzungen nicht begrenzt. Die große Spreizung ermöglicht sowohl einen leistungsoptimierten als auch einen verbrauchsoptimierten Betrieb des Kraftfahrzeuges.

Durch die stufenlose Wahl der Übersetzung kann darüber hinaus das Kraftfahrzeug in jedem möglichen Betriebspunkt betrieben werden.

Die US 4 836 056 A zeigt ein CVT-Getriebe, bei dem neben einer stufenlosen Betriebsart eine stufige Betriebsart vorgesehen ist., die beide automatisch in Abhängigkeit von Betriebsgrößen des Fahrzeuges ablaufen. Aus der JP 60-26847 A ist ein CVT-Getriebe bekannt, dessen Übersetzung durch den Fahrer willkürlich und stufenlos vorgegeben werden kann.

Zudem wird es vor allem bei einem Wechsel von einem Stufengetriebe zu einem stufenlosen Getriebe als störend empfunden, daß bei einem Kraftfahrzeug mit einem derartigen Getriebe Fahrgeschwindigkeit und Motorgeräusch entkoppelt sind. Dies erschwert die Einschätzung der eigenen Geschwindigkeit und der eigenen Beschleunigung.

Schließlich ist die Verstellgeschwindigkeit von stufenlosen Getrieben begrenzt und von der Getriebeeingangsdrehzahl abhängig. In erster Annäherung benötigt eine Verstellung des Getriebes von der kleinsten zur höchsten Übersetzung eine bestimmte Anzahl von Umdrehungen der eingangsseitigen Keilscheibe. Die damit verbundene Verzugszeit zwischen Leistungsanforderung und Leistungsabgabe ist beispielsweise bei einem Überholmanöver oder sportlicher Fahrweise störend.

Aufgabe der Erfindung ist es, ein Verfahren zum Steuern eines elektro-hydraulisch betätigten stufenlosen Getriebes zu schaffen, das einen direkten Eingriff des Fahreres in die Wahl der Übersetzung bei gleichzeitig verbesserter Bedienbarkeit erlaubt.

Die Lösung dieser Aufgabe ist im Patentanspruch 1 dargestellt. Vorteilhafte, die Erfindung weiterbildende Maßnahmen sind in den Unteransprüchen beschrieben.

Die Vorteile der Erfindung sind darin zu sehen, daß ein Verfahren zum Steuern eines elektro-hydraulisch betätigten stufenlosen Getriebes geschaffen ist, das durch die Simulation eines Stufengetriebes einen direkten Eingriff des Fahrers in die Wahl der Übersetzung erlaubt, das in seiner einfachen und übersichtlichen Bedienung einem Stufengetriebe nachgebildet ist.

Ein Kraftfahrzeug, das mit einem nach dem erfindungsgemäßen Verfahren betriebenen Getriebe ausgestattet ist, kann in den ermüdenden Standardfahrsituationen, wie z.B. Stadtverkehr oder Stau, in einer ersten, automatisch die Übersetzung wählenden Betriebsart gefahren werden, wodurch der Fahrer von der Wahl und dem Einstellen der korrekten Übersetzung entlastet wird. In unübersichtlichen Situationen oder bei sportlicher Fahrweise ist es möglich, die Wahl der Übersetzung in einer zweiten Betriebsart wie bei einem Schaltgetriebe direkt zu beeinflussen und für die jeweilige Situation die günstigste Übersetzung aus einer Gruppe von voreingestellten Übersetzungen zu wählen.

Durch diese Maßnahme wird außerdem die Akzeptanz eines stufenlosen Getriebes durch an Schaltgetriebe gewöhnte Fahrer erhöht. Die für den ungeübten Fahrer ungewohnte Loslösung des Motorgeräusches von der Fahrgeschwindigkeit entfällt in der zweiten Betriebsart. Mit dem nun wiederhergestellten Fahrgefühl ist somit auch ein Sicherheitsvorteil verbunden.

Die eingestellte Übersetzung wird während des Betriebes um kleine Beträge variiert; hierdurch wird einem durch Einlaufen an den lastbeaufschlagten Elementen eines stufenlosen Getriebes entstehenden Verschleiß entgegengewirkt, wenn dieses mit fester Übersetzung betrieben wird.

Durch die große mögliche Spreizung beim stufenlosen Getriebe sind extremere Auslegungen denkbar als dies bei Stufengetrieben möglich wäre. Es können im Extremfall in einem Getriebe sowohl Overdrive-Übersetzungen realisiert werden, die nur ein Halten einer bestimmten erreichten Geschwindigkeit ohne weitere Beschleunigungen zulassen, als auch ein extreme, auf Zugkraft ausgelegte Übersetzungen z.B. für Bergkurse, bei denen die Höchstgeschwindigkeit des Kraftfahrzeuges nicht durch den Luftwiderstand, sondern die Steigfähigkeit bei Maximaldrehzahl der antreibenden Brennkraftmaschine bestimmt wird.

Eine vorteilhafte Weiterbildung der Erfindung sieht vor, mehrere Gruppen von voreingestellten Übersetzungen in einem Speicher abzulegen. Die einzelnen Gruppen sind einem Wert einer den Fahrstil des Fahrers oder dessen verkehrssituationsbedingtes Handeln im Bezug auf die Steuerung des Kraftfahrzeuges bewertenden Fahraktivität SK(t) zugeordnet und über diese Fahraktivität SK(t) auch wählbar. Dies erlaubt eine Anpassung von Spreizung und Anzahl der voreingestellten Übersetzungen an den Fahrstil des Fahrers, wie dies bei einem Schaltgetriebe nur durch mechanische Änderungen möglich ist. In einem Getriebe werden je nach Fahrstil des Fahrers im Betrieb wechselnd ein Schongang-Getriebe, ein normal ausgelegtes Getriebe oder ein Sportgetriebe mit allen denkbaren Zwischenstufen dargestellt, wobei die oben genannten Extremauslegungen hierbei in der Regel nicht erreicht werden.

Weiterhin ist es vorgesehen, daß die im Speicher abgelegten Werte veränderbar sind. Hieraus ergibt sich die Möglichkeit des "end-of-line-programming", d.h. der fahrzeugspezifischen Programmierung der voreingestellten Übersetzungen zum Ende des Produktionsprozesses. Auch spätere Änderungen und damit Anpassungen an Kundenwünsche durch den Kundendienst, beispielsweise die Darstellung der oben genannten Extremauslegungen, sind bei dieser Art der Voreinstellung möglich.

Mit der vorgeschlagenen Wähleinrichtung sind auch Getriebe mit mehr als sechs Gängen bedienbar. Aus einer mehrgeteilten Ausbildung der Wähleinrichtung können die Übersetzungen vom Fahrer gewechselt werden, ohne daß dieser das Lenkrad loslassen muß.

Ein nach dem vorgeschlagenen Verfahren betriebenes stufenloses Getriebe eignet sich durch die festgehaltenen Übersetzungen insbesondere auch für die Anwendung von mechanischen oder hydraulischen Verspanneinrichtungen an übersetzungsbestimmenden Stellgliedern. Durch eine solche Maßnahme wird die Leistungsaufnahme einer Hydraulikpumpe, einem wesentlichen Energieverbraucher in einem stufenlosen Getriebe und damit einem der Gründe für den gegenüber einem Schaltgetriebe schlechteren mechanischen Wirkungsgrad, deutlich verringert und somit der mechanische Wirkungsgrad erhöht.

Zur Erhöhung des Gesamtwirkungsgrades ist es darüber hinaus auch möglich, eine Verstellpumpe zu verwenden. Mit dieser Pumpe kann die Pumpenleistung und damit der Energiebedarf der Pumpe der tatsächlich benötigten Pumpenleistung angepaßt werden, anstatt eine auf die maximal benötigte Leistung ausgelegte Pumpe nur kurzzeitig unter Vollast und sonst unter Teillast zu betreiben.

Die Erfindung wird nachfolgend anhand der in den Zeichnungen dargestellten Ausführungsbeispiele erläutert.

Es zeigen:
Fig. 1 ein Blockschaltbild einer elektrischen Steuerung für ein stufenloses Getriebe eines Kraftfahrzeuges,
Fig. 2 ein Blockschaltbild der mittels eines Steuergerätes gemäß Fig. 1 realisierten Steuerfunktionen,
Fig. 3 ein Blockschaltbildnach Fig. 2, jedoch für die von der Übersetzungssteuerung gemäß Fig. 2 umfaßten Funktionen,
Fig. 4 ein Flußdiagramm einer ersten Grundfunktion,
Fig. 5 ein Flußdiagramm nach Fig. 4, jedoch für eine erste Übergangsfunktion,
Fig. 6 ein Flußdiagramm nach Fig. 4, jedoch für eine Fahrsicherheitsfunktion und
Fig. 7 ein Flußdiagramm nach fig. 4, jedoch für eine zweiten Grundfunktion.

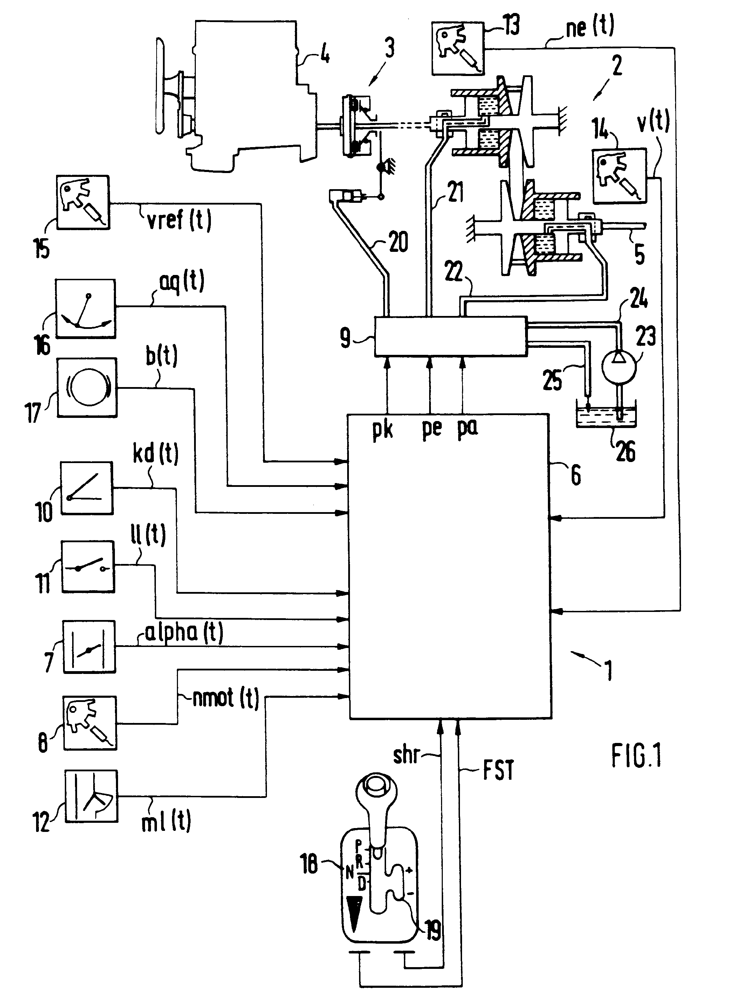

**Fig. 1** zeigt ein Blockschaltbild einer Steuerung 1 eines elektro-hydraulisch betätigten stufenlosen Getriebes 2 am Beispiel eines Umschlingungsgetriebes. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Größen oder Funktionen, die sich mit der Zeit t ändern, sind nachfolgend als Funktionen f(t) der Zeit t dargestellt.

Ein Steuergerät 6 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen ein Kick-down-Signal kd(t) eines Kick-down-Schalters 10, ein Leerlaufsignal 11(t) eines Leerlaufschalters 11, eine Luftmenge bzw. Luftmasse ml(t) eines Luftmengen- bzw. Luftmassengebers 12 der Brennkraftmaschine 4 sowie eine Getriebeeingangsdrehzahl ne(t) eines Getriebeeingangsdrehzahlgebers 13 und eine Fahrgeschwindigkeit v(t) eines Fahrgeschwindigkeitgebers 14. Zusätzlich wird vom Steuergerät 6 eine Geschwindigkeit vref(t) eines Referenzgeschwindigkeitgebers 15 an einer nicht angetriebenen Fahrzeugachse, eine Querbeschleunigung aq(t) eines Querbeschleunigungsgebers 16 und ein Bremssignal b(t) eines Bremssignalgebers 17 erfasst und verarbeitet.

Schließlich ist die Steuerung üblicherweise vom Fahrzeugführer über eine Wähleinrichtung 18 zur Vorwahl von Fahrstufen P (Parksperre), R (Rückwärtsgangstufe), N (Leergangsstufe) und D (selbstätige Einstellung des Übersetzungsverhältnisses u.ä. des stufenlosen Getriebes) beeinflußbar; ferner ist ein Einstellbereich der Wähleinrichtung 18 zur direkten Vorgabe des Übersetzungsverhältnisses u.ä. vorgesehen.

Die Wähleinrichtung 18 kann aus der Fahrstufe D in eine zweite Schaltgasse 19 bewegt werden, in der die Wähleinrichtung 18 als Wippschalter arbeitet und der Fahrzeugführer das Übersetzungsverhältnis im Sinne einer Hochschaltung oder einer Rückschaltung beeinflussen kann. Die Wähleinrichtung 18 gibt ein Fahrstufensignal FST und ein Schaltanforderungssignal shr für eine Hochschaltung oder eine Rückschaltung ab.

Hier und im folgenden steht der Begriff "Hochschalten" oder "Verringern der Übersetzung", für eine Übersetzungsänderung, die bei gleichbleibender Eingangsdrehzahl die Ausgangsdrehzahl des Getriebes erhöht. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl.

In Abhängigkeit von den genannten Größen steuert das Steuergerät 6 über einen Signalausgang pk und den Ventilblock 9 den Hydraulikdruck in der Anfahrkupplung 3 sowie über Signalausgänge pe und pa und den Hydraulikventilblock 9 ein Übersetzungsverhältnis ue zwischen der Getriebeeingangsdrehzahl ne(t) und der Getriebeausgangsdrehzahl (Fahrgeschwindigkeit) v(t) an. Der Hydraulikventilblock 9 verbindet hierzu entsprechende Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

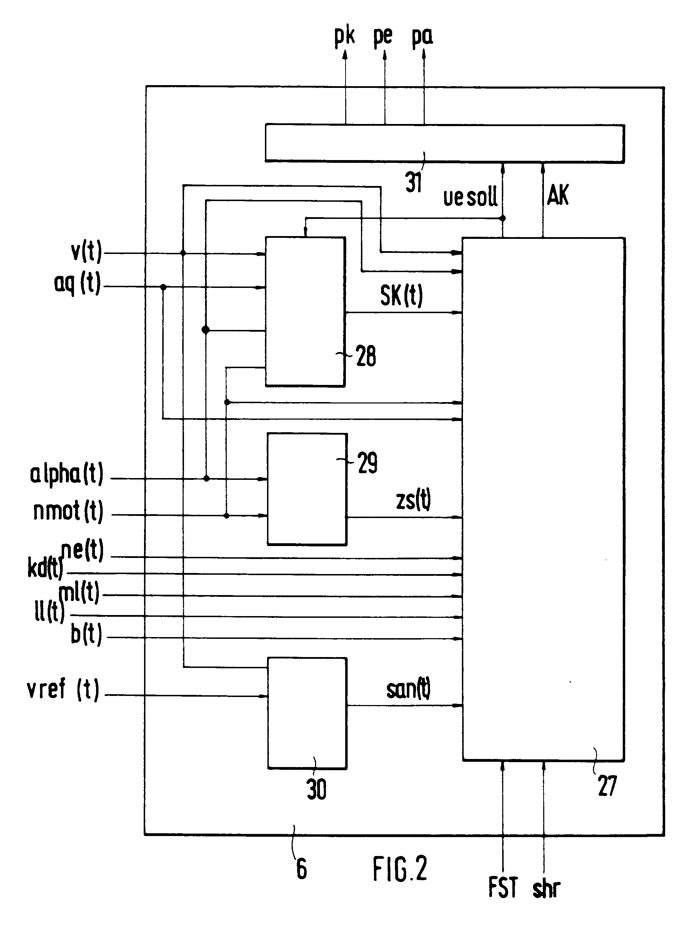

Das Steuergerät 6 umfaßt wie in **Fig. 2** dargestellt eine Übersetzungssteuerung 27, die mit einer Fahraktivitätsermittlungfunktion 28, einer Zug-Schub-Ermittlungsfunktion 29, einer Antriebsschlupfermittlungsfunktion 30 und einer Stellfunktion 31 verbunden ist.

Die Fahraktivitätsermittlungsfunktion 28 bestimmt eine den Fahrstil des Fahrers oder dessen verkehrssituationsbedingtes Handeln im Bezug auf die Steuerung des Kraftfahrzeuges bewertenden Größe Fahraktivität SK(t), vorzugsweise nach einem in der DE-OS 39 22 051 beschriebenen Verfahren.

Die Zug-Schub-Ermittlungsfunktion 29 gibt in Abhängigkeit von der Drosselklappenstellung alpha(t) und der Motordrehzahl nmot(t) ein Signal für Zug- oder Schubbetrieb des Fahrzeuges Zug/Schub zs(t) ab und die Antriebsschlupfermittlungsfunktion 30 ermittelt aus der Differenz von Fahrgeschwindigkeit v(t) und Geschwindigkeit vref(t) einen den Schlupf der angetriebenen Räder repräsentierenden Antriebsschlupf san(t).

Aus diesen Größen, dem Fahrstufensignal FST, dem Schaltanforderungssignal shr, der Drosselklappenstellung alpha(t), dem Kick-down-Signal kd(t), dem Leerlaufsignal 11(t), der Luftmasse ml(t), der Getriebeeingangsdrehzahl ne(t), der Fahrgeschwindigkeit v(t), der Querbeschleunigung aq(t), dem Bremssignal b(t) und der Getriedeausgangsdrehzahl ne(t) ermittelt die Übersetzungssteuerung 27 ein Soll-Übersetzungsverhältnis uesoll sowie ein Signal Anfahrkupplung auf/zu AK, die an die Stellfunktion 31 weitergegeben werden.

Die Stellfunktion 31 steuert mittels der Signalausgänge pe und pa die Übersetzungseinstellung des Getriebes 2, wobei das Soll-Übersetzungsverhältnis uesoll mit geringstmöglicher Verzugszeit, jedoch ohne merkliches Überschwingen eingestellt wird. Darüber hinaus wird die Anfahrkupplung nach Maßgabe des Signales Anfahrkupplung auf/zu AK von der Stellfunktion 31 über den Signalausgang pk gesteuert.

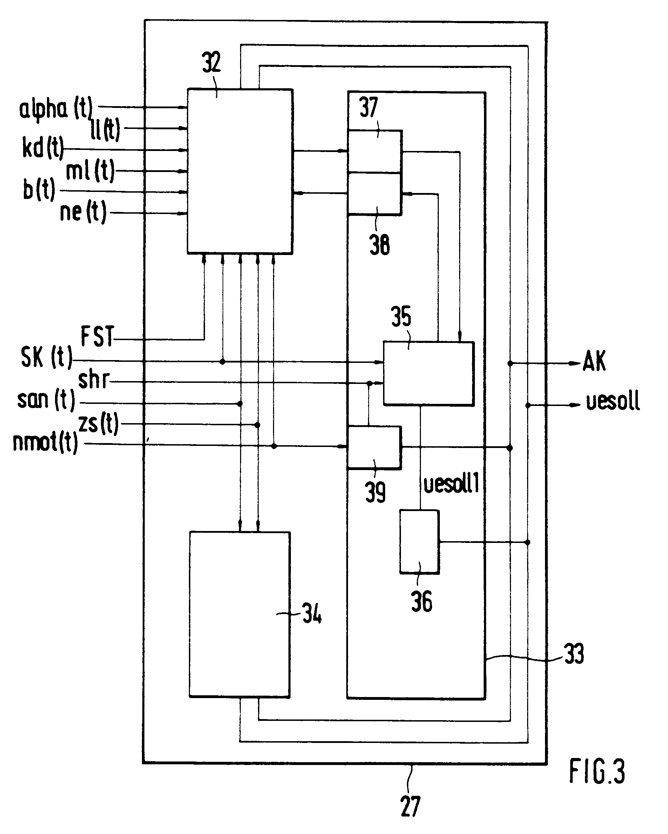

In **Fig. 3** ist eine Übersicht über die in der Übersetzungssteuerung 27 enthaltenen Funktionen dargestellt. Für die erste selbsttätig die Übersetzung wählende Betriebsart ist eine Automatikfunktion 32 mit den Eingangsgrößen Zug/Schub zs(t), Antriebsschlupf san(t), Fahrstufensignal FST, Fahraktivität SK(t), Drosselklappenstellung alpha(t), Motordrehzahl nmot(t), Leerlaufsignal ll(t), Kick-Down-Signal kd(t), Luftmassensignal ml(t), Bremssignal b(t) und Getriebeeingangsdrehzahl ne(t) vorgesehen.

Für die zweite vom Fahrer beeinflußte Betriebsart gibt es eine Manuellfunktion 33 mit den Eingangsgrößen Schaltanforderungssignal shr, Fahraktivität SK(t) und Motordrehzahl nmot(t). Weiterhin umfaßt die Übersetzungssteuerung 27 eine Fahrsicherheitsfunktion 34 mit den Eingangsgrößen Zug/Schub zs(t) und Antriebsschlupf san(t). Die genannten Funktionen erzeugen jeweils die Ausgangssignale Soll-Übersetzungsverhältnis uesoll und Anfahrkupplung auf/zu AK.

Innerhalb der Manuellfunktion 33 verarbeitet eine Grundfunktion 35 die Fahraktivität SK(t) und das Schaltanforderungssignal shr. Der Grundfunktion 35 nachgeschaltet ist eine Verschleißminderungsfunktion 36, die von der Grundfunktion ein Signal einer ersten Soll-Übersetzung uesolll erhält und ein Signal einer Soll-Übersetzung uesoll abgibt. An die Grundfunktion 35 sind eine erste Übergangsfunktion 37 und eine zweite Übergangsfunktion 38 angegliedert, die beide jeweils mit der Automatikfunktion 32 verbunden sind. Parallel zur Grundfunktion 35 ist eine Sicherheitsfunktion 39 mit der Motordrehzahl nmot(t) beaufschlagt und gibt das Schaltanforderungssignal shr sowie das Signal Anfahrkupplung auf/zu AK ab.

Die erste Übergangsfunktion 37 wird bei einem Wechsel von der Automatikfunktion 32 zur Manuellfunktion 33, d.h. einem Wechsel aus der ersten selbsttätig die Übersetzung wählenden zur zweiten vom Fahrer beeinflußten Betriebsart, aufgerufen und regelt den Übergang. Umgekehrt regelt die zweite Übergangsfunktion den Übergang von der Manuellfunktion 33 zur Automatikfunktion 32.

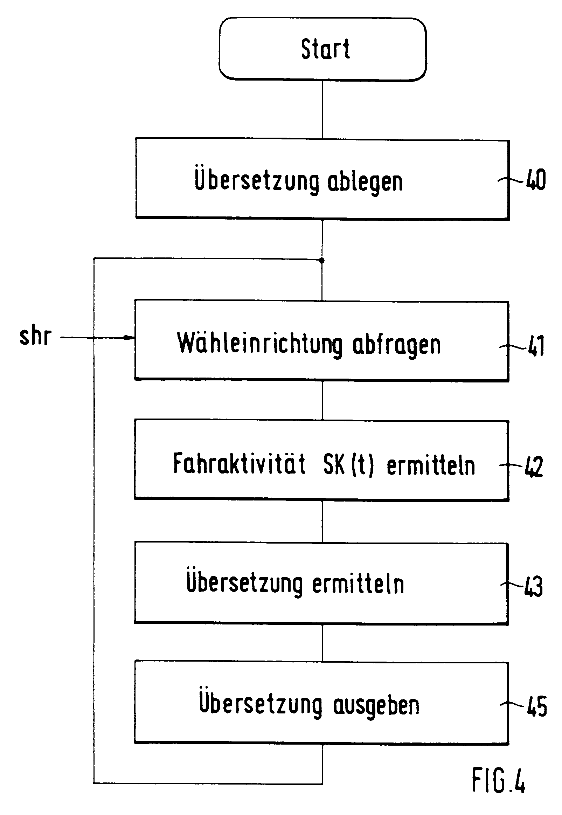

**Fig. 4** zeigt in einem Flußdiagramm die Grundfunktion 35. In einem dem Fahrbetrieb vorausgehenden Schritt 40 "Übersetzungen ablegen" werden Gruppen von voreingestellten Übersetzungen änderbar in einem innerhalb der Übersetzungssteuerung 27 vorgesehenen nicht dargestellten Speicher abgelegt.

Im Fahrbetrieb wird in einem Schritt 41 "Wähleinrichtung abfragen" auf ein Schaltanforderungssignal shr (Hochschalten oder Rückschalten) gewartet. In einem nachfolgenden Schritt 42 "Fahraktivität SK(t) ermitteln" wird ein Wert der Fahraktivität SK(t) von der Fahraktivitätsermittlungsfunktion 28 erfragt. Es folgt ein Schritt 43 "Übersetzung ermitteln", der aus der der Fahraktivität SK(t) zugehörige Gruppe von voreingestellten Übersetzungen mit dem Schaltanforderungssignal shr die zugehörige voreingestellte Übersetzung aus dem Speicher ausliest.

Das ermittelte Soll-Übersetzungsverhältnis uesoll wird in einem Schritt 45 "Übersetzung ausgeben" an die Verschleißminderungsfunktion 36 weitergegeben. Es folgt ein Rücksprung zu Schritt 41 "Wähleinrichtung abfragen".

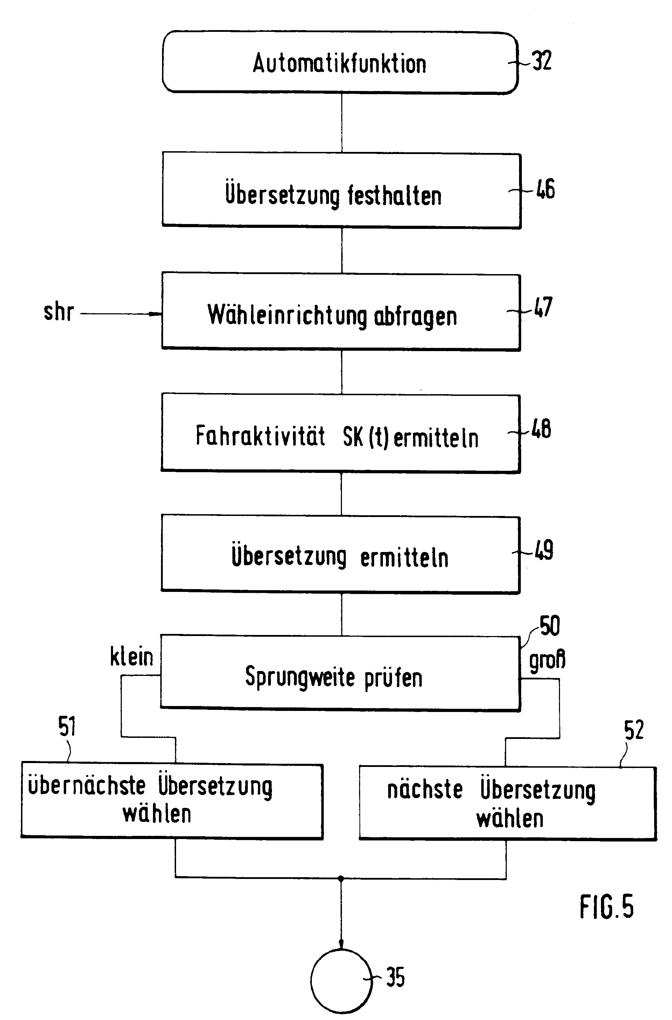

Die beim Übergang aus der ersten, selbsttätig die Übersetzung wählenden Betriebsart in die zweite, vom Fahrer beeinflußte Betriebsart notwendigen Schritte der ersten Übergangsfunktion 37 zeigt **Fig. 5** in einem Flußdiagramm. Zunächst wird in einem Schritt 46 "Übersetzung festhalten" die beim Verlassen der Automatikfunktion 32 eingestellte Übersetzung festgehalten. In einem Schritt 47 "Wähleinrichtung abfragen" wird auf ein Schaltanforderungssignal shr der Wähleinrichtung 18 gewartet. Es folgen Schritte 48 "Fahraktivität SK(t) ermitteln" und 49 "Übersetzung ermitteln"; letztere ermittelt aus der Fahraktivität SK(t) und dem Kommando der Wähleinrichtung 18 aus dem Speicher die in Schaltrichtung nächstliegende und die gegen die Schaltrichtung nächstliegene Übersetzung. Die Differenz zwischen den beiden genannten Übersetzungen wird als Stufensprung berechnet.

In einem Schritt 50 "Sprungweite prüfen" wird festgestellt, ob die Sprungweite zur in Schaltrichtung nächstliegenden Übersetzung, d.h. die Differenz von derzeit eingestellter und in Schaltrichtung nächstliegender Übersetzung, kleiner als ein vorgegebener Wert, vorzugsweise etwa die Hälfte des Stufensprunges ist. Ist das Ergebnis dieser Feststellung positiv, die Differenz also kleiner, so wird in einem Schritt 51 "übernächste Übersetzung wählen" die in Schaltrichtung übernächste Übersetzung gewählt und hinter dem Schritt 43 "Übersetzung ermitteln" an die Grundfunktion 35 weitergegeben. Ist das Ergebnis negativ, die Differenz also größer, so wird in einem Schritt 52 "nächste Übersetzung wählen" die in Schaltrichtung nächstliegende Übersetzung weitergegeben.

Für das nicht dargestellte Verfahren für den Übergang von der zweiten vom Fahrer beeinflußten zur ersten die Übersetzung selbsttätig wählenden Betriebsart wird die in der zweiten Betriebsart eingestellte Übersetzung innerhalb einer vorgewählten Zeit oder mit vorgewählter Verstellgeschwindigkeit an die in der selbsttätigen Betriebsart einzustellende Übersetzung angepasst.

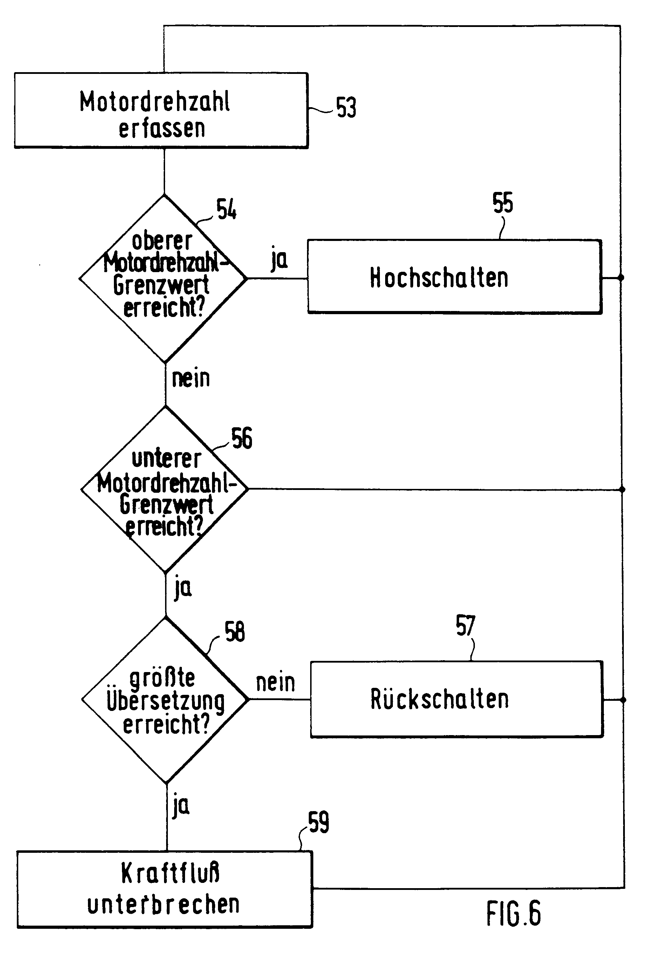

Ein Flußdiagramm der Fahrsicherheitsfunktion 34 zeigt **Fig. 6**. Die Motordrehzahl nmot(t) wird ständig in einem Schritt 53 "Motordrehzahl erfassen" erfaßt. Bei Erreichen des oberen Motordrehzahl-Grenzwertes der Brennkraftmaschine wird nach einer Abfrage 54 "oberer Motordrehzahl-Grenzwert erreicht?" ein Kommando 55 "Hochschalten", bei Erreichen des unteren Motordrehzahl-Grenzwertes nach einer Abfrage 56 "unterer Motordrehzahl-Grenzwert erreicht?" ein Kommando 57 "Rückschalten" an die Grundfunktion 35 abgegeben. Ist zusätzlich zur unteren Drehzahlgrenze in einer Abfrage 58 "größte Übersetzung erreicht?" auch die größte voreingestellte Übersetzung erreicht, so gibt die Fahrsicherheitsfunktion 34 in einem nächsten Schritt 59 "Kraftfluß unterbrechen" ein Signal Anfahrkupplung auf (AK=1) ab.

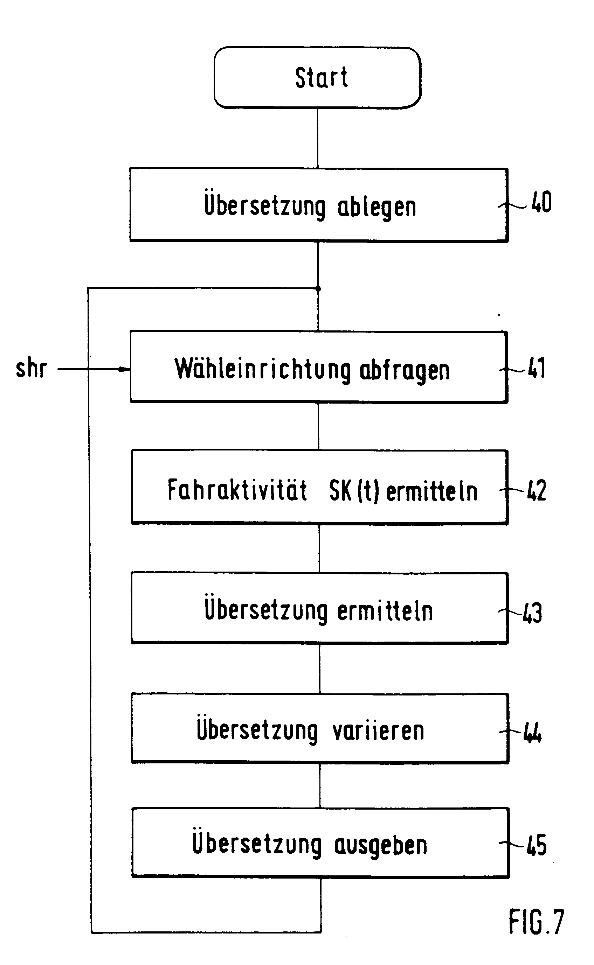

Vereinfachend kann es vorgesehen sein, die separate Verschleißminderungsfunktion 36 in die Grundfunktion 35 zu integrieren. Hierzu wird, wie in **Fig. 7** in einem Flußdiagramm dargestellt, ein Schritt 44 "Übersetzung variieren" zwischen Schritt 43 "Übersetzung ermitteln" und Schritt 45 "Übersetzung ausgeben" eingefügt, der das erste Soll-Übersetzungsverhältnis uesolll bei jedem Aufruf einer voreingestellten Übersetzung abwechselnd um +3%, 0% und -3% verändert und als Soll-Übersetzungsverhältnis uesoll weitergibt.

Die Übersetzungssteuerung 27 wirkt wie folgt: In dem dem Fahrbetrieb vorausgehenden Schritt 40 "Übersetzungen ablegen" werden Gruppen von voreingestellten Übersetzungen in dem nicht dargestellten Speicher abgelegt. Hierbei werden den Werten niedriger Fahraktivität SK(t) Gruppen von Übersetzungen entsprechend einer verbrauchsoptimierten Schoncharakteristik und den Werten höherer Fahraktivität SK(t) Gruppen von Übersetzungen entsprechend einer leistungsoptimierten Sportcharakteristik zugeordnet.

Dies bedeutet, daß für Werte niedriger Fahraktivität SK(t) die Anzahl und die Spreizung der Übersetzungen in der zugehörigen Gruppe kleiner und für Werte höherer Fahraktivität SK(t) die Anzahl und die Spreizung der Übersetzungen in der zugehörigen Gruppe größer gewählt wird. Damit stellen die Gruppen von Übersetzungen für niedrige Fahraktivitäten SK(t) ein Stufengetriebe mit Overdrive-Charakter und niedrigem Motordrehzahlniveau dar, während die Gruppen von Übersetzungen für höhere Fahraktivitäten SK(t) ein Stufengetriebe in überdrehender Auslegung und hohem Zugkraft- bzw. Motordrehzahlniveau darstellen.

In der ersten, selbsttätig die Übersetzung wählenden Betriebsart wird das Getriebe über die Wähleinrichtung 18 angesteuert. Die Übersetzungssteuerung 27 wählt in der Automatikfunktion 32 selbsttätig die passende Übersetzung, die dann von der Stellfunktion 31 im Getriebe 2 eingestellt wird.

Wünscht der Fahrer den Betrieb in der zweiten Betriebsart, so bringt er die Wähleinrichtung 18 aus der Wählstellung D in die zweite Wählebene 19. Die erste Übergangsfunktion 37 übernimmt die derzeit am Getriebe 2 eingestellte Übersetzung ue und hält diese zunächst fest. Erst wenn der Fahrer durch die Wähleinrichtung 18 ein Schaltanforderungssignal shr abgibt, wird zunächst die Fahraktivität SK(t) erfragt. Über diese Fahraktivität SK(t) wird eine zugehörige Gruppe von Übersetzungen ausgewählt, in der dann der Stufensprung bestimmt wird. Ist die Differenz zwischen der derzeit eingestellten Übersetzung, d.h. der letzten in der Automatikfunktion eingestellten Übersetzung und der in Schaltrichtung nächstliegenden Übersetzung kleiner als vorzugsweise etwa die Hälfte des Stufensprunges, so wird nicht die in Schaltrichtung nächstliegende, sondern die übernächste Übersetzung gewählt. An diesem Punkt wird an die Grundfunktion 35 übergeben.

Während des Betriebes in der zweiten Betriebsart wird im Schritt 41 "Wähleinrichtung abfragen" auf ein Schaltanforderungssignal shr (Hochschalten oder Rückschalten) gewartet. Im nachfolgenden Schritt 42 "Fahraktivität SK(t) ermitteln" wird ein Wert der Fahraktivität SK(t) von der Fahraktivitätsermittlungsfunktion 28 erfragt. Es folgt der Schritt 43 "Übersetzung ermitteln", der aus der der Fahraktivität SK(t) zugehörige Gruppe von voreingestellten Übersetzungen mit dem Schaltanforderungssignal shr die zugehörige voreingestellte Übersetzung aus dem Speicher ausliest. Hierdurch wird vermieden, daß eine Änderung des Fahrstiles zwischen zwei Wählvorgängen, die sich in einer Änderung der Fahraktivität SK(t) ausdrückt, zu einer Änderung der eingestellten Übersetzung führt. Erst bei einem Wechsel der Übersetzung durch den Fahrer wird eine Übersetzung aus der dem neuen Fahrstil entsprechenden Gruppe von Übersetzungen gewählt.

Die gewählte Übersetzung wird als erste Soll-Übersetzung uesolll im Schritt 45 "Übersetzung ausgeben" an die Verschleißminderungsfunktion 36 weitergegeben und ist zwischen zwei Schaltanforderungen zeitlich konstant. Hierdurch wird in dem stufenlosen Getriebe, das ursprünglich durch die stufenlose Einstellbarkeit und stetige Veränderung der Übersetzung charakterisiert ist, ein Stufengetriebe simuliert, dessen Übersetzungen gestuft und, abgesehen von der gewollten und verschleißmindernden kleinen Variation durch die Funktion "Übersetzung variieren", fest sind.

Bei stufenlosen Getrieben ist beim Betrieb mit festen Übersetzungen ein Verschleiß durch Einlaufen der kraftübertragenden Elemente zu erwarten.

Deshalb werden zwar feste Übersetzungen gewählt, die jedoch in einer gesonderten Funktion variiert werden. Dies geschieht vorzugsweise, indem das Soll-Übersetzungsverhältnis uesoll von der Verschleißminderungsfunktion 36 in Form einer Sinusschwingung mit kleinen Amplituden im Bereich von 3% des Soll-Übersetzungsverhältnisses uesoll und sehr niedriger Frequenz moduliert wird.

Es folgt ein Rücksprung zu Schritt 41 "Wähleinrichtung abfragen".

Gleichzeitig überwacht die Sicherheitsfunktion 39 die Motordrehzahl nmot(t) und gibt an die Grundfunktion 35 ein Schaltanforderungssignal shr ab, sobald ein unterer Motordrehzahl-Grenzwert oder ein oberer Motordrehzahl-Grenzwert erreicht wird. Bei größtem Übersetzungsverhältnis und Erreichen des unteren Motordrehzahl-Grenzwertes erzeugt die Sicherheitsfunktion außerdem das Signal Anfahrkupplung auf (AK=0) und unterbricht so den Kraftfluß.

Wünscht der Fahrer wieder den Übergang in die erste Betriebsart, so verläßt er die zweite Wählebene 19 in die Wählstellung D der Wähleinrichtung 18. Hierdurch setzt er die zweite Übergangsfunktion 38 in Gang. Diese ermittelt die in der Automatikfunktion 32 einzustellende Soll-Übersetzung uesoll und gleicht die letzte in der zweiten Betriebsart eingestellte Übersetzung ue innerhalb einer vorgegebenen Zeit oder mit vorgegebener Stellgeschwindigkeit an die Soll-Übersetzung uesoll an.

Bei einem Fahrzeug mit starrer Übertragung zwischen Fahrpedal und Leistungssteuerung der Brennkraftmaschine führt dies zu einer Änderung der Zugkraft, die vom Fahrer ausgeglichen werden muß. Bei einem beispielsweise mit einer elektrischen Übertragung zwischen Fahrpedal und Leistungssteuerung usgerüsteten Fahrzeug ist es dem gegenüber möglich, den Übergang bei einem Angleich der Übersetzungen beim Wechsel der Betriebsarten in Verbindung mit einer in der elektrischen Übertragung eingebauten Steuergerät so steuern, daß keine Zugkraftänderung auftritt.

Unabhängig von der gewählten Betriebsart überwacht die Fahrsicherheitsfunktion 34 die Größen Zug/Schub zs(t) und Antriebsschlupf san(t). Übersteigt der Antriebsschlupf san(t), der sich aus der Differenz der Drehzahl der angetriebenen Räder und der Drehzahl der nicht angetriebenen Räder berechnet, einen vorgegebenen Grenzwert und liegt gleichzeitig Schubbetrieb vor, so greift die Fahrsicherheitsfunktion 34 durch Verringern der Übersetzung ein und gibt in diesem Sinne ein dem Ausgangssignal der Grundfunktion 35 übergeordnetes Ausgangssignal Sollübersetzung uesoll ab. Übersteigt der Antriebsschlupf san(t) auch einen zweiten größeren Grenzwert, so wird zusätzlich der Kraftfluß unterbrochen, indem das Signal Anfahrkupplung auf (AK=1) abgegeben wird. Instabilen Fahrzuständen, die auftreten, wenn durch das Motorschleppoment Schlupf an den angetriebenen Rädern entsteht, wird hierdurch entgegengewirkt.

In Verbindung mit einer Antriebsschlupfsteuerung im Kraftfahrzeug kann es auch vorgesehen sein, daß die Fahrsicherheitsfunktion 34 die Antriebsschlupfsteuerung durch Änderung der Übersetzung unterstützt.

Entsprechend der DE-PS 33 41 652 oder der DE-OS 39 22 051 wird die Fahraktivität SK(t) durch einen den Fahrstil des Fahrers oder dessen verkehrssituationsbedingtes Handeln längerfristig bewertenden funktionellen Zusammenhang aus zyklisch oder antizyklisch erfassten aktuellen und vergangenen Werten einer einzigen Betriebskenngröße oder zu einer einzigen aus mehreren Betriebsgrößen eines Kraftfahrzeugs zusammengesetzten Größe ermittelt. Hierbei werden beispielsweise Werte der Drosselklappenstellung alpha(t), der Fahrgeschwindigkeit v(t) und der Querbeschleunigung aq(t) im Sekunden- bzw. Millisekundenbereich erfasst und daraus weitere Werte, wie z.B. die Drosselklappenänderungsgeschwindigkeit dalpha(t)/dt und die Beschleunigung des Fahrzeugs dv(t)/dt berechnet. Die ermittelten und berechneten Werte werden über Kennfelder mit weiteren Betriebsgrößen verknüpft und über einen funktionellen Zusammenhang zu einer Zwischengröße zusammengesetzt, aus der durch gleitende Mittelwertbildung, die sowohl die neu berechneten Werte als auch die vergangenen Werte längerfristig berücksichtigt, eine Fahraktivität SK(t) ermittelt.

Es hat sich insbesondere im Zusammenhang mit stufenlosen Getrieben gezeigt, daß es sinnvoll sein kann, die Bewertung des Fahrstils des Fahrers oder dessen verkehrssituationsbedingten Handelns unter definierten Betriebszuständen des Kraftfahrzeugs zu unterbrechen. Hierbei wird der augenblickliche Wert der Fahraktivität SK(t) wenigstens für den Zeitraum, für den der jeweilige Betriebszustand eintritt, gespeichert und die Bewertung im Anschluss an diesen Zeitraum mit dem abgespeicherten Wert der Fahraktivität SK(t) fortgesetzt.

Ein definierter Betriebszustand tritt hierbei ein, wenn das Kraftfahrzeug anhält. Dieser Betriebszustand kann beispielsweise definiert werden durch Fahrgeschwindigkeit v(t)≈0 und Leerlaufsignal ll(t). Hiermit wird erreicht, daß die Fahraktivität SK(t) während längerer Haltezeiten des Kraftfahrzeugs bei laufendem Motor, z.B. bei einem Ampelstop nicht auf den Minimalwert absinkt.

Als Wähleinrichtung 18 zur Durchführung des Verfahrens eignet sich insbesondere eine Wähleinrichtung gemäß der DE-OS 38 07 881, wobei die dort genannten Wählstellungen des Wählhebels in der ersten Schaltgasse durch zur Bedienung eines stufenlosen Getriebes notwendigen Wählstellungen, beispielsweise P (Parksperre), R (Rückwärtsgangstufe), N (Leergangsstufe), D (selbstätige Einstellung des Übersetzungsverhältnisses u.ä. des stufenlosen Getriebes) und ein Einstellbereich zur direkten Vorgabe des Übersetzungsverhältnisses u.ä., ersetzt werden.

In einer Weiterbildung sind die beiden Schaltgassen nicht notwendigerweise in einer Wähleinrichtung vereint, sondern räumlich getrennt. So kann in vorteilhafter Weise an einem Getriebetunnel des Fahrzeugs neben einem Fahrersitz die erste Schaltgasse zur Bedienung der ersten, selbsttätig die Übersetzung wählenden Betriebsart und an einem Lenkrad des Fahrzeugs die zweite Schaltgasse zur Bedienung der zweiten vom Fahrer beeinflußten Betriebsart vorgesehen sein. Ein Bedienelement der zweiten Schaltgasse wird dabei so geführt, daß der Fahrer zur Bedienung keine Hand vom Lenkrad lösen muß.

## Patentansprüche

1. Verfahren zum Steuern eines mit einer elektrohydraulischen Steuerung (1), einer Wähleinrichtung (18) und einer steuerbaren Anfahrkupplung (3) versehenen stufenlosen Getriebes (2) eines Kraftfahrzeuges, das von einem als Brennkraftmaschine (4) ausgeführten Motor angetrieben wird, wobei die Steuereinrichtung in einer ersten Betriebsart aus Signalen der Wähleinrichtung (18) und Betriebsgrößen des Kraftfahrzeuges wie Drosselklappenstellung (alpha(t)), Fahrgeschwindigkeit (v(t)) und Motordrehzahl (nmot(t)) mittels vom Fahrer wählbarer Kennlinien selbsttätig eine Übersetzung des Getriebes wählt und einstellt, **dadurch gekennzeichnet**, daß in einer zweiten, vom Fahrer wählbaren Betriebsart ein von ihm direkt beeinflußbares Stufengetriebe nachgebildet wird, dessen Schaltstufen nach Anzahl und Spreizung nach dem Fahrverhalten optimiert sind.

2. Verfahren nach Anspruch 1, **dadurch gekennzeichnet**, daß ein Wert einer den Fahrstil des Fahrers oder dessen verkehrssituationsbedingtes Handeln im Bezug auf die Steuerung des Kraftfahrzeuges bewertenden Fahraktivität (SK(t)) ermittelt wird, mehrere Gruppen von voreingestellten Übersetzungen vorgesehen sind und in der zweiten Betriebsart eine Gruppe von voreingestellten Übersetzungen so ausgewählt wird, daß bei Werten niedriger Fahraktivität (SK(t)) eine Gruppe von Übersetzungen entsprechend einer verbrauchtsoptimierten Schoncharakteristik und bei Werten höherer Fahraktivität (SK(t)) eine Gruppe von Übersetzungen entsprechend einer leistungsoptimierten Sportcharakteristik gewählt wird.

3. Verfahren nach Anspruch 2, **dadurch gekennzeichnet**, daß bei Werten niedriger Fahraktivität (SK(t)) die Anzahl der Übersetzungen in der zugehörigen Gruppe kleiner und bei Werten höherer Fahraktivität (SK(t)) die Anzahl der Übersetzungen in der zugehörigen Gruppe größer gewählt wird.

4. Verfahren nach Anspruch 2 oder 3, **dadurch gekennzeichnet**, daß bei Werten niedriger Fahraktivität (SK(t)) die Spreizung der Übersetzungen in der zugehörigen Gruppe kleiner und bei Werten höherer Fahraktivität (SK(t)) die Spreizung der Übersetzungen in der zugehörigen Gruppe größer gewählt wird.

5. Verfahren nach einem der Ansprüche 2 bis 4, **dadurch gekennzeichnet**, daß die Bewertung des Fahrstils des Fahrers oder dessen verkehrssituationsbedingten Handelns unter definierten Betriebszuständen des Kraftfahrzeugs unterbrochen und der augenblickliche Wert der Fahraktivität (SK(t)) wenigstens für den Zeitraum, für den der jeweilige Betriebszustand eintritt, gespeichert wird und die Bewertung im Anschluß an diesen Zeitraum mit dem abgespeicherten Wert der Fahraktivität (SK(t)) beginnend fortgesetzt wird.

6. Verfahren nach Anspruch 5, **dadurch gekennzeichnet**, daß ein definierter Betriebszustand eintritt, wenn das Kraftfahrzeug anhält (Fahrgeschwindigkeit v(t)≈0, Leerlaufsignal ll(t)=1).

7. Verfahren nach einem der Ansprüche 1 bis 6, **dadurch** **gekennzeichnet**, daß eine eingestellte Übersetzung von der Steuereinrichtung um einen kleinen Betrag variiert wird.

8. Verfahren nach Anspruch 7, **dadurch gekennzeichnet**, daß die Variation als Sinusschwingung mit sehr niedriger Frequenz und kleiner Amplitude durchgeführt wird.

9. Verfahren nach Anspruch 7, **dadurch gekennzeichnet**, daß bei jeder Wahl der Übersetzung die Übersetzung abwechselnd im Bereich von 3 %, 0 % und -3 % abweichend eingestellt wird.

10. Verfahren nach einem oder mehreren der vorhergehenden Ansprüche, **dadurch gekennzeichnet**, daß bei einem Übergang von der selbsttätigen zu der vom Fahrer beeinflußten Betriebsart die beim Verlassen der selbsttätigen Betriebsart eingestellte Übersetzung beibehalten wird und bei der ersten Wahl einer voreingestellten Übersetzung
- die in Schaltrichtung nächstliegende Übersetzung gewählt wird, wenn die Differenz zwischen der bei Verlassen der selbsttätigen Betriebsart eingestellten und der in Schaltrichtung nächstliegenden Übersetzung größer als ein voreingestellter Wert im Bereich der Hälfte der Differenz zwischen der in Schaltrichtung nächstliegenden Übersetzung und der entgegen der Schaltrichtung nächstliegenden Übersetzung ist und
- die in Schaltrichtung liegende übernächste Übersetzung gewählt wird, wenn die Differenz zwischen der bei Verlassen der selbsttätigen Betriebsart eingestellten und der in Schaltrichtung nächstliegenden Übersetzung kleiner als ein voreingestellter Wert im Bereich der Hälfte der Differenz zwischen der in Schaltrichtung nächstliegenden Übersetzung und der entgegen der Schaltrichtung nächstliegenden Übersetzung ist.

11. Verfahren nach einem oder mehreren der vorhergehenden Ansprüche, **dadurch gekennzeichnet**, daß bei einem Übergang von der manuellen zur selbsttätigen Betriebsart die eingestellte Übersetzung zunächst beibehalten und innerhalb einer vorgewählten Zeit oder mit vorgewählter Änderungsgeschwindigkeit an die in der selbsttätigen Betriebsart einzustellende Übersetzung angepasst wird.

12. Verfahren nach einem oder mehreren der vorhergehenden Ansprüche, **dadurch gekennzeichnet**, daß unabhängig von der Beeinflussung durch den Fahrer von der Steuereinrichtung bei Erreichen einer oberen oder unteren Drehzahlgrenze der Brennkraftmaschine eine andere voreingestellte Übersetzung so gewählt und eingestellt wird, daß sich die Drehzahl der Brennkraftmaschine wieder zwischen der oberen und der unteren Drehzahlgrenze befindet.

13. Verfahren nach einem oder mehreren der vorhergehenden Ansprüche, **dadurch gekennzeichnet**, daß unabhängig von der Beeinflussung durch den Fahrer von der Steuereinrichtung bei Erreichen einer unteren Drehzahlgrenze der Brennkraftmaschine und eingestellter größter voreingestellter Übersetzung der Kraftfluß durch die steuerbare Anfahrkupplung unterbrochen wird.

14. Vorrichtung zur Durchführung des Verfahrens nach einem oder mehreren der vorhergehenden Ansprüche, **dadurch gekennzeichnet**, daß die Wähleinrichtung zwei Schaltgassen besitzt, wobei eine erste Schaltgasse für die Bedienung des Getriebes in der selbsttätig die Übersetzung wählenden Betriebsart und eine zweite Schaltgasse für die Bedienung des Getriebes in der vom Fahrer beeinflussten Betriebsart vorgesehen sind und in der vom Fahrer beeinflussten Betriebsart die voreingestellten Übersetzungen gewählt werden, indem bei einer Bewegung des Bedienelementes aus einer Mittellage der zweiten Schaltgasse heraus in eine erste Richtung die nächsthöhere und bei Bewegung in eine zweite, der ersten entgegengesetzten Richtung die nächstniedrigere Übersetzung gewählt wird.

15. Vorrichtung zur Durchführung des Verfahrens nach wenigstens einem der Ansprüche 2 bis 11, **dadurch gekennzeichnet**, daß die Gruppen von voreingestellten Übersetzungen änderbar in einem Speicher abgelegt sind.

## Claims

1. A method of controlling a continuously variable transmission (2), provided with an electro-hydraulic control (1), a selector device (18) and a controllable starting clutch (3), of a motor vehicle which is driven by an engine designed as an internal combustion engine (4), wherein the control device in a first mode of operation automatically selects and sets a transmission gear ratio from signals of the selector device (18) and from operating variables of the motor vehicle such as throttle valve position (alpha(t)), driving speed (v(t)) and engine speed (nmot(t)) by means of characteristics which may be selected by the driver, characterized in that, in a second mode of operation which may be selected by the driver, a stepped transmission which may be directly influenced by him is reproduced, of which the gear-change steps are optimized with respect to number and spread in accordance with the driving behaviour.

2. A method according to claim 1, characterized in that a value of driving activity (SK(t)) is obtained which evaluates the driving style of the driver or his behaviour conditional on the traffic situation with respect to the control of the motor vehicle, several groups of preset gear ratios are provided, and in the second mode of operation a group of preset gear ratios is selected such that with values of low driving activity (SK(t)), a group of gear ratios corresponding to a fuel consumption-optimized overdrive characteristic is selected and with values of higher driving activity (SK(t)) a group of gear ratios corresponding to a performance-optimized sports-mode characteristic is selected.

3. A method according to claim 2, characterized in that with values of low driving activity (SK(t)) the number of gear ratios in the associated group is selected so as to be smaller, and with values of higher driving activity (SK(t)) the number of gear ratios in the associated group is selected so as to be greater.

4. A method according to claim 2 or 3, characterized in that with values of low driving activity (SK(t)) the spread of the gear ratios in the associated group is selected so as to be smaller, and with values of higher driving activity (SK(t)) the spread of the gear ratios in the associated group is selected so as to be greater.

5. A method according to one of claims 2 to 4, characterized in that the evaluation of the driving style of the driver or of his behaviour conditional on the traffic situation under defined operating conditions of the motor vehicle is interrupted and the instantaneous value of driving activity (SK(t)) is stored at least for the period in which the respective operating condition occurs, and the evaluation is resumed following this period beginning with the stored value of driving activity (SK(t)).

6. A method according to claim 5, characterized in that a defined operating condition occurs when the motor vehicle stops (driving speed v(t) ≈ 0, idling signal ll(t) = 1).

7. A method according to one of claims 1 to 6, characterized in that a set gear ratio is varied by the control device by a small amount.

8. A method according to claim 7, characterized in that the variation is effected in the form of a sine wave at very low frequency and with small amplitude.

9. A method according to claim 7, characterized in that with each selection of gear ratio, the gear ratio is set so as to deviate alternately within the range of 3 %, 0 % and -3 %.

10. A method according to one or more of the preceding claims, characterized in that at a change-over from the automatic mode of operation to that influenced by the driver, the gear ratio set when leaving the automatic mode of operation is retained and at the first selection of a preset gear ratio
- the next gear ratio in the gear-changing direction is selected when the difference between the gear ratio set when leaving the automatic mode of operation and the next gear ratio in the gear-changing direction is greater than a preset value in the region of half the difference between the next gear ratio in the gear-changing direction and the next gear ratio in the opposite direction to the gear-changing direction, and
- the next but one gear ratio in the gear-changing direction is selected when the difference between the gear ratio set when leaving the automatic mode of operation and the next gear ratio in the gear-changing direction is smaller than a preset value in the region of half the difference between the next gear ratio in the gear-changing direction and the next gear ratio in the opposite direction to the gear-changing direction.

11. A method according to one of more of the preceding claims, characterized in that at a change-over from the manual to the automatic mode of operation, the set gear ratio is initially retained and within a preselected time or at a preselected changing speed is adjusted to the gear ratio to be set in the automatic mode of operation.

12. A method according to one or more of the preceding claims, characterized in that independently of the driver's influence on the control device, when an upper or lower speed limit of the internal combustion engine is reached, a different preset gear ratio is selected and set such that the speed of the internal combustion engine is again situated between the upper and the lower speed limit.

13. A method according to one or more of the preceding claims, characterized in that independently of the driver's influence on the control device, when a lower speed limit of the internal combustion engine and a set maximum preset gear ratio is reached, the power flow through the controllable starting clutch is interrupted.

14. A device for implementing the method according to one or more of the preceding claims, characterized in that the selector device has two gear-change lanes, a first gear-change lane being provided for operating the transmission in the mode of operation which automatically selects the gear ratio, and a second gear-change lane is provided for operating the transmission in the mode of operation influenced by the driver, and in the mode of operation influenced by the driver the preset gear ratios are selected by selecting the next gear ratio up with a movement of the operating element out of a centre position of the second gear-change lane into a first direction, and by selecting the next gear ratio down with a movement into a second direction in the opposite direction to the first one.

15. A device for implementing the method according to at least one of claims 2 to 11, characterized in that the groups of preset gear ratios are variably stored in a memory.

## Revendications

1. Procédé de commande d'une boîte de vitesses (2), à variation continue (2), dotée d'une commande (1) électro-hydraulique, d'un dispositif de sélection (18) et d'un embrayage de démarrage (3) commandé, d'un véhicule automobile qui est entraîné par un moteur, réalisé sous la forme d'un moteur à combustion interne (4), le dispositif de commande sélectionnant et réglant automatiquement un rapport de la boîte de vitesses dans un premier mode de fonctionnement, à partir de signaux du dispositif de sélection (18) et de grandeurs de fonctionnement du véhicule telles que la position du papillon des gaz (alpha (t)), de la vitesse de marche (v(t)) et de la vitesse de rotation du moteur (nmot(t)), au moyen de courbes caractéristiques à sélectionner par le conducteur, caractérisé en ce que dans un second mode de fonctionnement, à sélectionner par le conducteur, il est simulé une boîte de vitesses à crans, directement sous l'influence du conducteur, dont les crans de marche sont optimisés quant à leur nombre et leur extension, en fonction du mode de conduite.

2. Procédé selon la revendication 1, caractérisé en ce qu'il est déterminé une valeur d'une activité de conduite (SK(t)), évaluant le style de conduite (SK(t)) du conducteur ou son comportement dû aux conditions de circulation, en ce qui concerne la commande du véhicule, en ce que plusieurs groupes de rapports préréglés sont prévus et en ce que dans le second mode de fonctionnement il est sélectionné un groupe de rapport préréglé, de manière que pour des valeurs de faible activité de conduite (SK(t)), il est sélectionné un groupe de rapports correspondant à une caractéristique économique optimisée quant à la consommation et pour des valeurs de grande activité de conduite (SK(t)), il est sélectionné un groupe de rapports correspondant à une caractéristique sportive optimisée quant à la puissance.

3. Procédé selon la revendication 2, caractérisé en ce que pour des valeurs de faible activité de conduite (SK(t)), le nombre de rapports dans le groupe correspondant est choisi plus petit et pour des valeurs de grande activité de conduite (SK(t)), le nombre de rapports dans le groupe correspondant est choisi plus grand.

4. Procédé selon les revendications 2 ou 3, caractérisé en ce que pour des valeurs de faible activité de conduite (SK(t)), l'extension des rapports dans le groupe correspondant est choisie plus petite et pour des valeurs de grande activité de conduite (SK(t)), l'extension des rapports dans le groupe correspondant est choisie plus grande.

5. Procédé selon l'une des revendications 2 à 4, caractérisé en ce que l'évaluation du style de conduite du conducteur ou de son comportement dû aux conditions de la circulation dans des états de fonctionnement définis du véhicule est interrompue et la valeur momentanée de l'activité de conduite (SK(t)) est mémorisée au moins pendant l'intervalle de temps au cours duquel se manifeste l'état de fonctionnement respectif, et l'évaluation est poursuivie, à la fin de cette période, en commençant par la valeur mémorisée de l'activité de conduite (SK(t)).

6. Procédé selon la revendication 5, caractérisé en ce qu'un état de fonctionnement défini intervient lorsque le véhicule s'arrête (vitesse de marche v(t)) ≈ 0, signal de ralenti ll(t) = 1).

7. Procédé selon l'une des revendications 1 à 6, caractérisé en ce que le dispositif de commande fait varier d'une petite valeur le rapport réglé.

8. Procédé selon la revendication 7, caractérisé en ce que la variation s'effectue sous la forme d'une oscillation sinusoïdale de très basse fréquence et de petite amplitude.

9. Procédé selon la revendication 7, caractérisé en ce que pour chaque sélection du rapport, le rapport est réglé en alternance avec un écart de la plage de 3 %, 0 % et -3 %.

10. Procédé selon une ou plusieurs des revendications précédentes, caractérisé en ce que dans le cas d'un passage du mode de fonctionnement automatique au mode de fonctionnement influencé par le conducteur, le rapport réglé, à la fin du mode de fonctionnement automatique, est conservé et lors de la première sélection d'un rapport préréglé
- le rapport situé le plus près dans le sens de la commutation est sélectionné, lorsque la différence entre le rapport réglé à la fin du mode de fonctionnement automatique et le rapport le plus proche dans le sens de la commutation, est plus grande qu'une valeur préréglée de l'ordre de la moitié de la différence entre le rapport situé le plus près dans le sens de la commutation et le rapport situé le plus près dans le sens inverse et
- le deuxième rapport le plus proche dans le sens de la commutation est sélectionné, lorsque la différence entre le rapport réglé à la fin du mode de fonctionnement automatique et le rapport le plus proche dans le sens de la commutation, est inférieure à une valeur préréglée de l'ordre de la moitié de la différence entre le rapport le plus proche dans le sens de la commutation et le rapport le plus proche dans le sens inverse.

11. Procédé selon une ou plusieurs des revendications précédentes, caractérisé en ce que dans le cas d'un passage du mode de fonctionnement manuel au mode de fonctionnement automatique, le rapport réglé est d'abord conservé et est adapté au rapport à régler en mode de fonctionnement automatique, dans un intervalle de temps présélectionné ou à une vitesse de variation présélectionnée.

12. Procédé selon une ou plusieurs des revendications précédentes, caractérisé en ce qu'indépendamment de l'influence exercée par le conducteur sur le dispositif de commande, lorsqu'est atteinte une limite de vitesse de rotation supérieure ou inférieure du moteur à combustion interne, un autre rapport préréglé est sélectionné et réglé, de manière que la vitesse de rotation du moteur à combustion interne se situe à nouveau entre la limite supérieure et la limite inférieure.

13. Procédé selon une ou plusieurs des revendications précédentes, caractérisé en ce qu'indépendamment de l'influence exercée par le conducteur sur le dispositif de commande, lorsqu'est atteinte une limite de vitesse de rotation inférieure du moteur à combustion interne et en cas de rapport réglé sur le plus grand rapport préréglé, la transmission des forces par l'embrayage de démarrage commandé est interrompue.

14. Procédé pour la mise en oeuvre du procédé selon une ou plusieurs des revendications précédentes, caractérisé en ce que le dispositif de sélection possède deux pistes de commutation, une première piste étant prévue pour la commande de la boîte de vitesses dans le mode de fonctionnement sélectionnant automatiquement le rapport et une deuxième piste est prévue pour la commande de la boîte de vitesses dans le mode de fonctionnement influencé par le conducteur, et dans le mode de fonctionnement influencé par le conducteur, les rapports préréglés sont sélectionnés, en ce que dans le cas d'un déplacement de l'élément de commande à partir d'une position centrale de la deuxième piste de commutation, il est sélectionné dans un premier sens le rapport immédiatement supérieur et en cas de déplacement dans un second sens, opposé au premier, il est sélectionné le rapport immédiatement inférieur.

15. Dispositif pour la mise en oeuvre du procédé selon l'une au moins des revendications 2 à 11, caractérisé en ce que les groupes de rapport préréglés sont stockés dans une mémoire de manière variable.
